# EUROPEAN PATENT SPECIFICATION

(11) **EP 2 486 339 B1**
(45) Date of publication and mention of the grant of the patent: **12.02.2020**
(21) Application number: 10822466.8
(22) Date of filing: 04.10.2010
(51) Int. Cl.: F24S 20/63, F24S 20/61, F24S 60/00

(54) **SOLAR ENERGY COLLECTOR AND THERMAL STORAGE DEVICE**
SONNENENERGIEKOLLEKTOR UND WÄRMESPEICHERVORRICHTUNG
COLLECTEUR D'ÉNERGIE SOLAIRE, ET DISPOSITIF D'ACCUMULATION THERMIQUE

(30) Priority: 05.10.2009 US 248550 P
(43) Date of publication of application: 15.08.2012
(73) Proprietor: Hunter Douglas Inc., Upper Saddle River, NJ 07458 (US)
(72) Inventor: COLSON, Wendell B., Weston Massachusetts 02493 (US); FOGARTY, Daniel M., Framingham Massachusetts 01701 (US)
(74) Representative: EP&C
(86) International application number: PCT/US2010/051267
(87) International publication number: WO 2011/044014

(56) References cited:
- WO-A2-2008/054497
- DE-A1- 2 829 523
- JP-A- S5 949 449
- US-A- 3 990 201
- US-A- 4 066 062
- US-A- 4 532 917
- US-A- 4 532 917
- US-A- 4 692 744
- US-A- 5 217 000
- US-B1- 6 589 613
- US-B1- 6 758 211
- US-B2- 6 613 404
- US-B2- 7 058 292
- WEINLADER H ET AL: "PCM-facade-panel for daylighting and room heating", SOLAR ENERGY, PERGAMON PRESS. OXFORD, GB, vol. 78, no. 2, 7 June 2004 (2004-06-07), pages 177-186, XP027840609, ISSN: 0038-092X [retrieved on 2005-02-01]

## Description

The present invention refers to a solar energy collector and thermal storage device.

### BACKGROUND OF THE DISCLOSED EMBODIMENTS

### FIELD OF THE DISCLOSED EMBODIMENTS

The disclosed embodiments relate to the field of passive solar energy heating units which may be installed in buildings in place of conventional windows.

### DISCUSSION OF THE ART

Passive solar buildings aim to maintain interior thermal comfort throughout the sun's daily and annual cycles while reducing the requirement for active heating and cooling systems. Passive solar building design is one part of green building design, and does not include active systems such as mechanical ventilation or photovoltaics.

The scientific basis for passive solar building design has been developed from a combination of studies, including climatology and thermodynamics (particularly solar radiant energy input and heat transfer losses). The main source of heat input is radiant energy, and the primary source is the sun. Due to the solar altitude path, which is a result of the inclination of the earth's axis of rotation in relation to its orbit, the low midday sun readily admits light and warmth during the winter in the direction of equator facing structures which, in the Northern Hemisphere, include south facing walls.

When positioned on a south wall of a structure, windows can be a ready and predictable site for transmitting solar radiation. Windows, particularly low-emissivity (low-e) type, can provide insulation value, which reduces a building's thermal conductivity, allowing the building to be heated or cooled relatively separate from the outside.

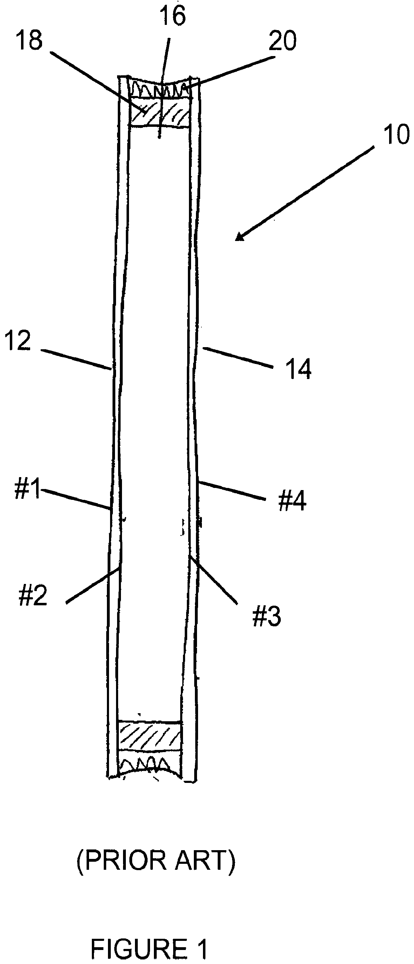

Figure 1 shows a typical Insulating Glass Unit (IGU) 10. Such units are made from two or more glass panes, also known as "lites," which include exterior and interior facing lites 12, 14 separated by a sealed space or cavity 16. Figure 1 is a double glazing type, meaning it has two lites 12, 14 surrounding one typically insulated cavity 16. Triple glazings, containing three lites and two insulated cavities, are also well known. When used generically, the term "glazing" represents a transparent part of a wall and thus can represent various types of window units, such as units having one, two or three lites, i.e., a single, double or triple glazing.

In Figure 1, the lites 12, 14 have surfaces sequentially identified in typical fashion, starting with the # 1 surface on the exterior (environment) side of the exterior lite 12, the # 2 surface on the interior side of the exterior lite 12, the # 3 surface on the interior side of the interior lite 14 and which faces the # 2 surface, and the # 4 surface on the interior (living space) side of the interior lite 14.

A spacer 18 is disposed around the perimeter of the insulated unit which separates the two lites 12, 14. This spacer may be filled with a moisture absorbing material called a desiccant. To reduce heat transfer through the spacer 18 and increase overall thermal performance, the spacer 18 may be constructed of foam, fiberglass, or use a hybrid design of metal and plastic. The perimeter of the entire unit is sealed with a sealant 20.

Manufacturers have introduced the use of argon, krypton, and xenon gas for filling the cavity 16, with measurable improvement in thermal performance such as dramatically increased insulating values. Argon is inexpensive, nontoxic, nonreactive, clear, and odorless. The distance between opposing lites is a function of the shallow thermal cycles of the noble gas. The optimal spacing for an argon-filled unit is the same as for air, about one half of an inch (11-13 mm).

Krypton is nontoxic, nonreactive, clear, and odorless and has better thermal performance, but is more expensive to produce. Krypton is particularly useful when the space between lites must be thinner than normally desired, for example, one quarter of an inch (6 mm) . The optimum gap width for krypton is 3/8" (9 mm). A mixture of krypton and argon gases is also used as a compromise between thermal performance and cost.

Starting in the mid-1980s, low-e coatings for glass were developed and brought to market. These are thin, mostly transparent coatings, often of metal, applied to the surface of the glass, which use the longwave radiation reflectivity of the bare metal surface to resist radiative heat flow within an insulating cavity. This increases the insulating capability of the insulating cavity. They also work synergistically with the noble gas fills to further increase the cavity's insulating capability. Low-e coatings also absorb a percentage of the incoming solar radiation, turning it into heat.

In a double glazed IGU, the low-e coating can be placed either on the #2 surface or the #3 surface, depending on the application. The change in surface location of the coating does not affect the insulating properties of the IGU, only the percentage of solar heat gain. Specifically, when building low solar gain, sealed glass units, the low-e coating is positioned on the #2 surface. Heat absorbed by the low-e coating at surface #2 is inhibited from passing through the cavity 16 and to the #3 surface, by the emissivity of the low-e coating, and is rejected to the exterior. Ninety percent or more of IGU units produced today are made in this way, and resist both solar heat gain as well as thermal losses.

In contrast, the low-e coating can be positioned on the #3 surface for producing a high solar heat gain (SHG), low-e double glazing unit, which is the type of glazing unit utilized in a passive heating system. Such glazings are designed to reduce heat loss and admit solar gain. Heat absorbed by the low-e coating now heats the inner lite by the emissivity of the low-e coating rather than being rejected to the outside environment. Characteristics of a high gain IGU as compared to a low gain IGU is a relatively large solar heat gain coefficient (SHGC). If Figure 1 were viewed as a high gain, low-e IGU glazing, the #3 surface would be provided with the low-e surface coating in order to provide for an optimal SHGC.

The SHGC is the fraction of solar radiation admitted through a glazing unit, both directly transmitted and absorbed and subsequently released inward. The higher a glazing's SHGC, the more solar heat it transmits. Incidentally, a glazing's "U-value," also known as the overall heat transfer coefficient, is the inverse of its thermal resistance or R-value and is a measure of the rate of non-solar heat loss or gain through it. The higher the U-value, the lower a glazing's resistance to heat flow. As the units of the R-value are sf*F*h/BTU, the units of the U-value are BTU/(h*F*sf), where af=square foot, F is the temperature in degrees Fahrenheit, and h is time (e.g., hours).

Understanding the above concepts, the inventors are aware of various limitations with the use of high-gain, low-e glazings. In high gain, low-e glazings, heat absorbed by the coating on the #3 surface is generally transferred to the interior (living space) side of the interior lite 14. However, the process also heats the interior lite, which can, on a cold winter day, reach 120 to 150 degrees F. The higher the temperature of the glass the greater the heat gradient to the outside. This elevated heat gradient causes the glazing's radiative, conductive and convective forces to rise as well to the outside, reducing the net SHGC. If one could keep the #3 surface cooler, losses would be reduced, and net gain to the interior will be raised.

Moreover, high gain glazings, while preferable for passive heating, can create wide temperature swings in the habitable space they enclose, particularly if they cover a large percentage of the south facing wall. As a rough average, incoming solar radiation on a sunny winter day in Boston, Massachusetts and many other parts of the country may produce 250-300 BTUs per square foot per hour through a south facing glazing for a period of 3-5 hours. This solar radiant energy, coupled with the aforementioned elevated temperature of the low-e coated inner lite, creates large bursts of heat input into the living space. Such a room, of the proper size, exposed to this kind of heat gain could reach, during a cold winter day in Boston, Massachusetts, 130 degrees.

Conversely, during the long periods of night and or cloudy days between these solar input bursts, even the low-e coated interior lite has a thermal conductivity such that it will become colder than the interior space. If, as mentioned, a large percentage of the south facing wall is glazed, this will tend to cool off the space uncomfortably at night. The room would be uncomfortable, if not uninhabitable.

To mitigate against the discomfort of the temperature swings, passive heating systems typically use materials to store heat. The ability to store heat is determined by the thermal mass of a material, which is essentially the mass of material present multiplied by the specific heat capacity of that material. In a passive heat context, thermal mass provides "inertia" against temperature fluctuations, sometimes known as the thermal flywheel effect. For example, when outside temperatures are fluctuating throughout the day, a large thermal mass within the insulated portion of a house can serve to "flatten out" the daily temperature fluctuations. This is because the thermal mass will absorb heat when in the direct path of solar radiation, or when the surroundings are hotter than the mass, and give heat back when the surroundings are cooler. In passive heating systems, a thermal mass is warmed by direct solar radiation during the day. Heat stored in the mass is then released back into the interior living space during the night.

Some material types known for their thermal mass capabilities are concrete, clay bricks and other forms of masonry. An old solution to "flatten out" temperature fluctuations was to build a structure or a room in a structure with a masonry fireplace or a stone or ceramic tile floor in the room. Such a configuration served dual functions of serving as structural elements for fire protection as well as for thermal storage of the heat generated from the fire and the heat input from the sun. From a passive solar energy standpoint, it would be difficult to add too much thermal mass in a house.

One of the failures of the above disclosed type of system when used for collecting solar radiation is that the thermal mass should be of a dark absorptive color and should stay in the direct path of the incoming solar radiation. This can be problematic, not only because the path of solar radiation moves throughout the day, but because people invariably put furniture, rugs, wall hangings and the like over the mass which obstructs the solar radiation from hitting it. The result is an overheating of the space, and lack of heating of the thermal mass.

Further, enclosed spaces of the type mentioned above tend to be "sunwashed." That is, the large areas of unshaded glass, subjected to a direct, low-angle winter sun, become intolerably bright. Furthermore, the solar infrared spectrum energy, which comprises more than fifty percent of total solar energy, is admitted to the space at near full force. The result is a space which feels much hotter than it really is, like a hot day at the beach. This sunwashing may be nice in theory, but it can make it quite uncomfortable and glaring for normal interior activities.

The use of a dark colored masonry wall as a thermal mass, directly behind south facing glazing in a passive heating system, was explored by French engineer Félix Trombe, in 1956, in Font-Romeu-Odeillo-Via. With a "Trombe" wall, during the day, sunlight shines through a southerly facing glazing and directly warms the surface of the thermal mass. This solves the misplaced furniture problem and the sunwashing problem. However, in the original single glazed (single lite, no insulating cavity) design, very little of the received heat ended up in the interior living space and most was lost to the environment at night, because of the poor insulating characteristics of the single glazing unit.

By using insulating glazings, and particularly high gain, low-e type insulating glazings on the outside of the Trombe wall, the average temperature of the thermal mass of the Trombe wall could be made higher than the average room temperature. Accordingly, heat could flow from the Trombe wall into the house interior.

Though aided by the IGU, the Trombe wall still had problems. The masonry wall necessarily obstructed view and lighting from glazings. Furthermore, the wall had a substantial weight as the typical Trombe wall is twelve to sixteen inches thick of masonry construction. So, for example, such a wall would be an impractical solution for a homeowner seeking to retrofit a south facing wall with a passive heating system. Moreover, because masonry is only a moderate heat conductor, the dark colored exterior surface of the masonry wall tended to heat up quite readily on sunny winter days. This increased the temperature difference across the glazing, and thus the insulative heat losses of the glazing, lowering the system's efficiency.

Options to the masonry Trombe wall have been explored in prior art patents and non-patent literature. One example is U.S. Patent No. 4,532,917 to Taff et al., for a "Modular Passive Solar Energy Heating Unit Employing Phase Change Heat Storage Material Which Is Clearly Transparent When In Its High-Stored-Energy Liquid State," which granted on August 6, 1985. This patent discloses a phase change thermal mass which must receive a certain minimum amount of heat before the mass becomes transparent so as to provide a clear view to the outside of a residence.

Yet another option to a masonry Trombe wall is to use water as the thermal storage medium. Of course, water can be contained in steel tanks, and one can receive all the benefits of water as a storage medium listed here. However, steel tanks do not solve the view and light transmission problems associated with the masonry Trombe wall. The true benefit to a water wall is when one uses the transparency or at least translucency of the water storage medium, such as disclosed in International Publication No. WO 2008/054497 A2 to the present applicant, for "Solar Heating Blocks," which published on May 8, 2008.

The closest prior art is represented by document US-B-6589613.

The benefits of using water storage include, for example, that a three-inch column of water has a similar heat capacity as a one-foot thick masonry wall. Furthermore, like a standard window, a water column is transparent and translucent. Further, water has a higher thermal conductivity than masonry. This means the energy absorbed on a low-e coated lite disposed on the exterior side of the water column is quickly distributed to the whole water mass. This lowers the surface temperature of the exterior side of the low-e coated lite, thus lowering the temperature difference between the lite and the exterior side environment, increasing efficiency. Further yet, because it can be transparent, other solar absorption means can be located further within the mass, which increases the efficiency of the storage medium.

However, walls of water have their own challenges. Water structures can be compromised by algae growth, suspended precipitants of minerals and by evaporation, so that the water filled structures have to be hermetically sealed. Air bubbles introduced during the filling process can attach to the interior glass surfaces and, shortly after filling the modules, combine into larger, visibly prominent bubbles, which float to the top of the modules.

Another problem with the transparent or translucent water solution is that, due to hydrostatic pressure, it is impractical to build a large, and especially tall, glass containment vessel for the liquid water. A more reasonable size square block, e.g., between eight inches and two feet per side, have been used to overcome this problem. However, an array (plural rows and columns) of square, water filled "fish tanks" can present a problem in that a significant amount of space in a given array may need to be occupied by a rack support system, which then creates the appearance of a large number of mullions or glass dividers. Further, the array may require a significant amount of seals, which introduces another avenue for failure. Yet further, with such a design, it may be necessary to disassemble, at least to some degree, the full array of water blocks to repair or replace any one of the blocks.

Yet another problem with prior art designs, such as with the Trombe wall and various water block implementations, is the placement of an air gap between the glazing and the heated mass. The air gap is formed by intentionally leaving a space between the interior side lite and the thermal mass, such as the masonry wall. The spacing provides for convective ventilation to occur around the wall to assist in drawing heat from the wall into the interior living space. Typically, vents with dampers are installed through the masonry wall at the top and bottom, and are opened to allow convective flow on sunny days.

It has been generally accepted that the above described air gap configuration improves overall heat gain. However, the inventors have found that it is more thermally efficient to position the interior side lite of a noble gas filled, high gain, low-e IGU glazing directly against the exterior side surface of the thermal mass. This structural connection directly thermally connects the low-e coating on the #3 surface of a double glazed IGU with the thermal mass. This, makes the connection between the insulative cavity and the thermal mass more thermally efficient and reduces the temperature swings at the low-e surface which otherwise would reduce the efficiency of the system.

The inventors have found that by using a water based thermal storage medium, coupling the low-e surface to its exterior side surface, and bounding the exterior side of the low-e surface by a noble gas, i.e., creating an exterior side insulating cavity, the exterior side surface of the storage medium keeps cool enough that convective vents of earlier Trombe wall systems are not needed to exhaust the extra heat generated at this surface on a sunny day. Instead, this heat can be conducted into the water mass for later use.

Accordingly, as indicated, there is a synergistic effect of coupling a heat storage unit on its exterior side with an insulated cavity, where the interior lite of the insulated cavity, on its insulated cavity facing side, has a low-e coating. However, as with noble gas fills of modern, double glazing constructions, it is essential to create a permanent gas tight seal around the edges of the two lites encapsulating the noble gas in order to contain the noble gas.

Unfortunately, one cannot simply position a full sized glass pane at the exterior side of an assembled water filled thermal array and bound it with a noble gas fill. Invariably, noble gas would leak from air spaces around the stacked thermal array. This is because the stacked thermal array could not be built with the level of hermetic seals required to retain the gas for a long period of time. Rather, each water block would need to be fabricated with an insulating cavity integrated to its exterior side.

Accordingly, it is desirable when using water blocks as a storage medium to build each water block with an insulating cavity, such that each insulating cavity is the same size as each heat storage cavity. Nonetheless, these smaller insulated water blocks provide additional ability for a system failure due to the additional amount of requisite seals, and an additional complexity in fabrication, on-site assembly, etc. Most importantly, each insulating glass seal is a thermal pathway, or short, which increases thermal losses about the glazing unit.

In addition, smaller insulated water blocks have other associated problems. For example, approximately six inches at the perimeter of any sealed IGU glazing is affected by thermal shorts through the edge spacer material. As the above identified U-value is typically measured as a center-of-glass value, the U-value can be significantly degraded for smaller insulated water blocks in the size commonly manufacturable for stacked water block thermal arrays.

Furthermore, with the smaller insulated water blocks, the net solar aperture is substantially reduced as the unit size is dropped. This is because the edge treatment is a constant width of about one half to three quarters of an inch. As can be appreciated, when a block size drops to about twelve inches per side, a large percentage of the aperture is taken up by the edge treatment.

Accordingly, there has been a long need for making large, sealed double glazed thermal storage units, instead of thermally inefficient systems designed in which a large part of the area would be thermally shorted by spacers, or where the low-e coating could not be directly thermally connected to the thermal mass and bounded by a noble gas filled insulating cavity. That is, the storage unit should be a thermally efficient, transparent and translucent structure, which is large enough to avoid excessive thermal shorts, and with which gain from sunny winter days is greater than nighttime loss, so as to provide supplemental heat.

One attempt at providing a tall, high gain, low-e insulated cavity that is thermally coupled with a same sized heat storage cavity was provided in U.S. Patent No. 6,589,613 to Kunert, for an "Insulating Glass Element For Glazing A Building," granted on July 8, 2003 (the "'613 patent"). The '613 patent is directed to an "insulating glass element" comprising an exterior clear glass pane and an interior green glass pane. A low-e coating is positioned against the exterior side of the green glass pane, where the low-e coating faces a gas filled space between the clear glass and the green glass.

In one embodiment, the '613 patent discloses that instead of using the green glass, one could use two spaced apart glass panes with fluid disposed therebetween. The fluid is disclosed as being either water or "a homogenously dispersed hydrogel of high viscosity" to reduce the pressure in tall insulating glass elements. However, as will now be addressed, this disclosed embodiment in the '613 patent has shortfalls.

The present inventors have discovered that a critical characteristic of a suitable hydrogel for use as a thermal storage material between lites is proper adhesion of the hydrogel to the lites and internal cohesion for the gel itself. Such characteristics define the proper tensile and shear characteristics of the gel, preventing the gel from deforming and flowing, over time, due to gravity, and thereby losing its shape. The adhesion and cohesion characteristics are required for the hydrogel to be self supporting and to avoid visual defects and thermal inefficiencies created from gaps which would otherwise develop between the hydrogel encasing glass panes and the hydrogel or within the hydrogel itself. In other words, with the proper adhesion and internal cohesion characteristics, the hydrogel adheres to the surface of the encasing glass panes and does not sag or separate.

Additionally, a suitable hydrogel would need to be UV stable. Such stability avoids chemical breaking down, fluid separation, and/or discoloration such as "yellowing" from prolonged exposure to sunlight.

Furthermore, a preferred hydrogel would not be a fluid. Rather the hydrogel would instead be a cross linked solid gel. A preferable cross linked solid gel would be capable holding a high percentage of water.

The above required adhesion, cohesion, UV stability, and structural characteristics of the hydrogel are not mentioned in the '613 patent. Rather, the '613 patent simply refers to the proposed fluid as a "homogenously dispersed hydrogel of high viscosity." Indeed, the inventors, after extensive experimentation and investigation, have been unable to obtain or even identify a hydrogel material with the appropriate adhesion, cohesion and UV stable characteristics, let alone a high viscosity fluid hydrogel.

Through extensive research, the inventors found a fire safety window that uses a hydrogel to absorb heat from a fire. This fire safety window is disclosed in the Detailed Description section, below. The hydrogel in this fire safety window is not ultraviolet stable. It is postulated by the inventors that the lack of ultraviolet stability is because of the flame retardants and intumescents incorporated into the gel to prevent flame spreading after the water contained by the hydrogel is boiled off.

Ultraviolet stability in a gel fire glass window is not important because these windows are not exposed to solar or ultraviolet radiation for any prolonged period of time. Typically these windows are used on the interior of a structure. If they are used on the exterior of the structure they are used to create a heat barrier from a potential fire between the structure that has the gel fire glass window and a closely positioned, adjacent building that could catch fire. Because of the close position of the adjacent building, sunlight and therefore ultraviolet light is blocked from hitting the window.

The inventors working in a confidential relationship with the manufacturer of the gel fire glass and recognizing the ultraviolet stability deficiency of the gel used in the gel fire glass have directed this company to prepare gel glass structures using a hydrogel that does not include the flame retardants and intumescents. While this defeats the intended use of the hydrogel for fire glass the inventors believe it meets the requirements of the inventors for a thermal storage unit, which is ultraviolet stable, and contains a hydrogel with the proper adhesion and cohesion characteristics.

The benefits of this particular hydrogel are unexpected because fire safety barriers have a primary purpose of preventing heat from being transmitted from one area to an adjacent area. The gel in a fire glass window should be kept at as low a temperature as possible. The lower the temperature of the gel in the fire glass window the more heat the fire glass window can absorb and the longer it can provide a thermal barrier between a fire and adjacent structure on the other side of the fire glass window. Such a primary purpose of the fire safety barrier is the exact opposite of the purpose of transmitting heat to an adjacent area. Transmitting heat to an adjacent area, however, is the primary purpose of the insulating glass element disclosed herein.

Aside from being unable to identify a suitable hydrogel, another shortfall of the '613 patent is the failure to recognize the minimum thickness of the thermal fluid mass in order to provide for proper heating on a winter day. The '613 patent is directed to maintaining a constant temperature level of the glass pane over "a relatively long term" (613' patent, column 3, lines 30-40). To do so, the '613 patent discloses providing a window with an overall "conventional thickness of 27 mm," with the clear glass pane being 3-5 mm thick, the interspace between the clear glass pane and the absorptive green glass pane being 6-12 mm, and the thickness of the absorptive green glass pane being 12 mm ('613 patent, column 3, lines 15-25; column 9, lines 45-55).

The '613 patent further discloses that the above stated thicknesses do not change when the fluid mass is utilized in place of the green glass. Indeed, turning to Figure 4 of the '613 patent, incorporated herein by reference, one can see the overall thickness for the fluid/gel filed portion of the system is narrower than the gas filed portion of the system. For example, if the overall thickness for the heat absorbing portion of the system is 10-12 mm, and the two spaced apart panes are 3 mm each, the depth of the water fill is just 6 mm (e.g., one quarter of an inch) which is far to shallow to provide a "constant temperature" over a "relatively long term."

Furthermore, the '613 patent discloses that the water filled heat mass "triples" the heat storage capacity of the green glass. On a winter day, with heat input of 200 BTUs per square foot per hour during the day, even tripling the heat capacity of a 12 mm thick green glass would not accomplish the goal of providing a "constant temperature" over a "relatively long term." Shortly after the sun sets, e.g., within countable minutes, the stored heat would be completely dissipated from the system. On a winter day, when darkness is far greater than fifty percent of the hours in a day, draining available heat within a short period of time would be almost meaningless.

### SUMMARY OF THE EMBODIMENTS

In view of the disclosed background, a solar energy collector and thermal storage device for placement in a building's exterior architectural opening is provided, having an insulating cavity including a first lite on the device exterior side and a second lite spaced inwardly therefrom, defining a depth of the insulating cavity, and being substantially filled with an insulating gas. A thermal storage cavity is provided which includes the second lite and a third lite spaced inwardly therefrom, defining a depth of the thermal storage cavity which is at least the same size as the insulating cavity depth, and is substantially filled with a thermal storage medium. The thermal storage medium is a hydrogel adhering to the second lite and the third lite and having cohesion characteristics such that it is self supporting and maintains its shape within the thermal storage cavity. A low-emissivity coating disposed on the insulating cavity side of the second lite inhibits thermal radiation transfer from the storage medium to the exterior.

The insulating gas is, for example, a noble gas such as argon, krypton or xenon. Additional insulating cavity layers using a high clarity lite can be added and sealed, as disclosed herein, to the exterior side of this assembly, which can be filled with noble gas to create higher insulating levels for more extreme climates.

### DESCRIPTION OF THE FIGURES

It is to be understood that the following drawings depict details of only typical embodiments of the invention and are not therefore to be considered to be limiting of its scope, and in particular:
Figure 1 illustrates a prior art double glazed IGU "insulating glass unit";
Figure 2 illustrates one disclosed embodiment; and
Figure 3 illustrates a further disclosed embodiment.

### DETAILED DESCRIPTION OF THE DISCLOSED EMBODIMENTS

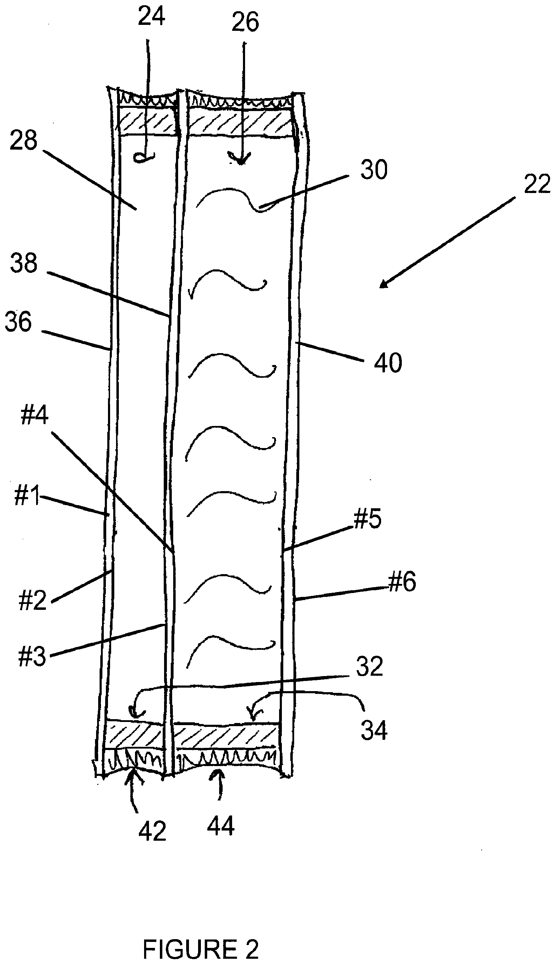

Figure 2 illustrates one disclosed embodiment, which is a passive heating system 22 comprising a sealed glazing unit with two sealed cavities 24, 26. Not to be confused with triple glazing for insulating purposes, in this unit the outer, or first cavity 24 is filled typically with a noble gas 28, krypton, etc., and is an insulating component. The inner, or second cavity 26 is filled with an aqueous medium 30 and sealed, and is the thermal storage component.

In this illustration, the #1 surface is the exterior (environment) side surface of the exterior (first) lite 36 in the insulating cavity; the #2 and #3 surfaces are mutually facing surfaces in the insulating cavity and are respectively part of the exterior lite 36 and middle (second) lite 38; the #4 and #5 surfaces are mutually facing surfaces in the storage cavity and are respectively part of the middle lite 38 and interior (third) lite 40; and the #6 surface is the interior (living space) side surface of the interior lite 40.

As indicated, the insulating cavity is the exterior cavity and the storage cavity is the interior cavity. Moreover, it is to be appreciated that the middle lite is both the interior lite for the insulating cavity and the exterior lite for the thermal storage cavity.

In addition, the exterior lite 36 would be glass of a low iron type to maximize solar gain. The #3 surface would have a low-e coating on it, so that the middle lite 38 would be a low-e type. The interior lite 40 could be standard clear, or may be tinted as will be seen in further descriptions.

Spacers 32 in the insulating cavity 24 contain a desiccant while ordinarily spacers 34 in the storage cavity 26 would not. Spacers 32 in the insulating cavity 24 would be designed to minimize heat flow, while that is less important in the storage cavity 26.

The preferred aqueous medium 30 is a hydrogel which has adhesion and cohesion characteristics enabling it to adhere to the #4 and #5 surfaces, which are separated by the spacer 34 known in the IGU art. Such a suitable medium for this purpose would be comprised primarily of sodium polyacrylate and water, i.e., a hydrogel in which water is partially solidified between the encasing lites 38 and 40. In such a hydrogel, water is contained within a substantially dilute crosslinking system exhibiting very little to no flow in a steady state. Such a hydrogel could be filled into the degassed cavity in a liquid state, and later gelled. Furthermore, a microencapsulated phase change material could be added to the hydrogel to boost its heat capacity.

The use of the hydrogel with proper adhesion and cohesion characteristics is important because it permits the transparent thermal storage panel to have tall dimensions which would not be possible if water were used to fill the cavity. As compared with water panels which would break from hydrostatic pressure, the hydrogel forms a self-supporting structure, adhering to the surface of the glass. This structure is not susceptible to catastrophic failure, even though it is primarily water and carries out the same thermal storage function as water. Without the concern of a structural failure, the thermal storage system can be installed in an inclined orientation which would be imprudent with water filled glass cavities, such as overhead as part of a skylight.

Moreover, a suitable hydrogel is UV stable. Such UV stability prevents the hydrogel from chemically breaking down, separating liquid from solid, or discoloring such as "yellowing" due to extensive sunlight exposure as would be required of a south face glazing.

As mentioned in the Background section, the inventors have found that a product containing the suitable adhesion and cohesion characteristics is manufactured in the art of fire resistive panels by SAFTI FIRST, of 325 Newhall Street, San Francisco CA 94124-1432, USA. Specifically, SAFTI FIRST manufactures a product under the name of SuperLite II-XL-120. In its typically manufactured form, this product has a thickness of just one and a half inches, weighs 12 lbs/sf, and is clear. The inventors, under a confidential relationship, directed SAFTI FIRST to remove the chemicals, other than the hydrogel, that provide flame retardency from the gel. This was done in the belief that the product would be ultraviolet stable.

It is to be noted that the thickness of the gel product includes the lites on either side. Accordingly, the actual thickness of the gel material is one inch. This thickness, the inventors have determined, is the minimum required thickness to provide meaningful heat storage so as to provide continual heat payback over a reasonable period of time, e.g., a full winter night after a sunny day.

It is important to recognize and understand the primary purpose of the SuperLite II-XL 120, which is fully separate and distinct from the primary purpose of the disclosed embodiments. The whole purpose of fire barrier gel windows is to impede progress of heat into the gel, and prevent heat from traveling into adjoining space. For example, SuperLite II-XL 120 is a fire resistive transparent gel which blocks radiant heat transfer to meet ASTM E119 requirements. The mechanism by which the gel blocks heat is by being transformed, from blazing fire generated heat, into a dense and highly heat insulating crust after the first pane adjacent to the heat is shattered by the heat. The crust slowly propagates itself from the shattered first pane toward the second pane which is not exposed to the heat. During this process the gel does not separate from the second pane. It is important to note that gel structure remains after the water in the hydrogel boils off. This gel structure that holds water is a solid, not a fluid, and it burns slowly after the water is gone.

In accordance with its fire protection characteristics, the SuperLite II-XL 120 gel not only stops smoke and flames as with known glass brick or wired glass found in, e.g., school corridors, but also prevents heat radiation from passing therethrough. Such heat radiation can inflame curtains, furniture, and other flammable materials, even though the flames are contained behind the fire rated wall. As compared with other fire protective glazing products, such as ceramics, SuperLite II-XL 120 provides a significantly longer barrier to fire generated heat and has no overall area limitations for its use in walls, windows, transoms, and sidelites.

Contrary to the primary purpose of the SuperLite II-XL 120 gel, in the disclosed embodiments, heat transfer to the thermal mass is promoted, accelerating absorption of solar heat into the gel, and allowing it to pass easily to the other side. A substantial increase of radiant heat into the thermal mass has been obtained by utilizing, for the middle lite 38, a low-e coated glass, which preferably provides an emissivity of 0.3 or below and converts a percentage of the solar radiation in the infrared region of the solar spectrum into thermal energy. The low-e coating for the middle lite 38 is positioned on its exterior side, i.e., the #3 surface, so that it is in direct thermal contact with the gel, making that thermal connection more efficient. This configuration reduces the temperature swings within the high gain glazing, which otherwise reduces the effectiveness of the heat transfer through the insulated cavity, as indicated above.

A suitable glass for the middle lite 38 is a tempered Pilkington Energy Advantage(TM) low-e coated glass. This glass is obtainable from Pilkington North America Inc., 811 Madison Avenue, Toledo, Ohio 43604-5684. The Pilkington Energy Advantage(TM) low-e coated glass is designed to provide a high light transmittance and a high solar transmittance, allowing more of the sun's rays to enter the gel 30 as solar energy, which can be converted into usable heat.

The disparate and inapposite application of the SuperLite II-XL 120 as disclosed herein, as compared with its designed application, should now be apparent to one reviewing the present disclosure. The designed application of the SuperLite II-XL 120 is to block heat, not promote heat transfer to the other side. Placing a high gain, low-e coated glass, such as the Pilkington Energy Advantage glass, directly against the gel, on the side exposed to thermal radiation, would be an incomprehensible configuration if the SuperLite II-XL 120 were being used according for its design purpose. Promoting heat transfer to the gel would necessarily diminish the overall heat blocking characteristics of the fire retarding system, by unnecessarily raising its temperature thus reducing the amount of heat it can hold which would provide an unacceptable outcome for one seeking a fire-retardant product.

In comparison with the designed purpose of the SuperLite II-XL 120, the configuration which promotes heat transfer to the gel is exactly the inventive configuration. This unobvious modification to the originally intended use of the SuperLite II-XL 120 transforms the gel from a heat blocking system to a system which purposefully transfers comforting heat to the interior of a room.

Furthermore, to the extent the SuperLite II-XL 120 may have been sold for external glazings, it would never have been sold with a low-e coating on the same surface as provided in the disclosed embodiments. The gel would always have been provided in an external glazing with the purpose of absorbing heat from a closely positioned outside building fire. This would be accomplished by putting the low-e coating, if used, on the exterior lite of an integrated insulated glazing, e.g., on surface #2. This would reduce solar infrared energy or fire infrared energy from getting to the gel layer. Therefore, as can be appreciated, the SuperLite II-XL 120 is not designed to absorb heat from the sun and prevent that heat from escaping to the exterior as disclosed herein.

With the understanding that fire-retarding gels have not heretofore been used to purposely redistribute heat to the interior of a room, it is also noteworthy that the referenced high-gain glass, i.e., the Pilkington Energy Advantage low-e coated glass, is designed to reduce transmission of ultraviolet rays. This helps to prevent premature fading and degradation of fabrics, upholstery and carpeting.

Turning now to the lite 40 on the interior, living space side of the storage cavity, this lite 40 is a PPG Graylite-14 tinted glass, obtainable from PPG Industries, Inc., Guys Run Road Harmarville, PA 15238. The PPG Graylite gray tinted glass, as compared to the other lites in the passive heating system 10, absorbs a high percentage of the incoming energy, both visible and infrared, allowing a small fraction of visible light transmittance. As with the glass used for the second lite 38, the PPG Graylite-14 glass blocks a significant amount of UV energy so as to prevent interior fabrics from fading. The absorption of incoming energy serves to further heat the gel, such heat to be stored in the gel for later distribution to the living space. It also serves to minimize the sunwashing effect, discussed earlier.

An alternative to the Graylite-14 glass for sunwashing control would be to tint the gel itself. A benefit of tinting the gel is that the tint will be dispersed uniformly through the gel, allowing it to heat evenly. One might try to use dyes for this purpose but it has been found in practice that they will fade over time. Much more suitable is a true pigment tint, such as silver nitrate, which readily mixes with water and forms a suspension of colloidal silver particles. Silver nitrate may be added in appropriate amounts to the aqueous polymerizable solution used to fill the cavity 26 between lites 38, 40. As the solution polymerizes to form the gel, suspended colloidal silver particles are prevented from settling out and provide the gel with a uniform tint, which does not fade over time. For example, a concentration of silver nitrate would remove 80% of the visible light passing through the thermal storage panel.

Tinting the gel would serve a dual purpose as it would reduce glare and also increase absorption of solar energy into the gel. Moreover, the middle lite 38 can be tinted to minimize glare and improve thermal absorption into the gel 30. That is, the middle lite 38 can having a low-e tint on the #3 surface, such as with a Pilkington low-e tint applied to the PPG Graylite glass. Such a configuration would serve to cut out upwards of ninety percent of the light and harmful UV before reaching the gel. Alternatively, a layer of tint can be applied to the #4 surface of the middle lite 38. In such a configuration, the storage medium would directly contact the tint layer. Further, various tints can be added to increase solar absorption and effectiveness.

With the gel 30 adhering to the #4 and #5 surfaces on the respective middle and interior lites, the sealed heat storage cavity 26 can be manufactured to a very large size. Since the sealed insulating cavity is the same size as and integral with the heat storage cavity, having a large heat storage cavity 26 enables the use of an equally large sealed insulating cavity 24. This minimizes the number of glass elements, seals, the risk for failure, costs, undesirable appearance, and thermal shorts. This is superior to prior art systems, in which glass blocks containing water where severely limited in size and in height to about two feet, typically requiring an extensive array of dividers and separate sheets of glass.

Turning to the insulating cavity 24, a suitable exterior lite 36 would have a SHGC of 0.70 or greater, and preferably about 0.90. The inventors have utilized a Pilkington Optiwhite, low iron glass, as the exterior lite 36 in the passive heat system 22. The Pilkington Optiwhite has been selected because it provides a high light transmission and high solar heat transmittance, and it is sealable.

The spacer 32 between the exterior lite 36 and the middle lite 38 is a Super Spacer (TM) type from Edgetech USA, 800 Cochran Avenue, Cambridge, Ohio 43725. The spacer 32 is an engineered, all foam, "NO-Metal" technology. In addition, the spacer 32 is a dual seal, warm edge spacer system that uses a high-performance acrylic adhesive for its structural seal, backed by a moisture vapor seal. Unlike metal-based spacers, the all foam, no-metal construction of the spacer 32 is nonconductive, blocking heat flow through the glazing. By blocking the heat escape path, the spacer provides an optimum thermal performance.

The size of the spacer 32, corresponding to the space between lites 36 and 38, defining the depth of the insulating cavity, is substantially the same as typical spacing between lites in a double or triple glazing. The insulating cavity 24 is filled with a noble gas, such as argon or an argon/krypton mixture so as to provide insulation from exterior temperatures. Accordingly, the separation distance between lites in the cavity filled with the noble gas is a function of the shallow thermal cycle of the gas. For example, the separation would be about one half of an inch for argon, three-eighths of an inch for krypton, or one-quarter of an inch for xenon.

For example, insulating cavity 24 would be between a quarter and a half inch in depth, with a correspondingly sized spacer 32. Further, typically, the thermal storage cavity 26 would be sized so that the space between the encasing lites 38, 40, defining the depth of the thermal storage cavity 26, is between one and four inches, with a correspondingly sized spacer 34. The size of the insulating cavity 24 maximizes insulating value, while the size of the storage cavity 26 maximizes aqueous heat storage capacity.

Sealants 42, 44 are provided about the perimeter of the cavities 24, 26. The sealants are manufactured from, e.g., one part silicone, two part silicone, polyisobutylene (i.e., butyl rubber), hot melt butyl, polyurethane, polysulfide, and acrylic latex. The sealant enables the spacers 32, 34 to make a firm, airtight seal.

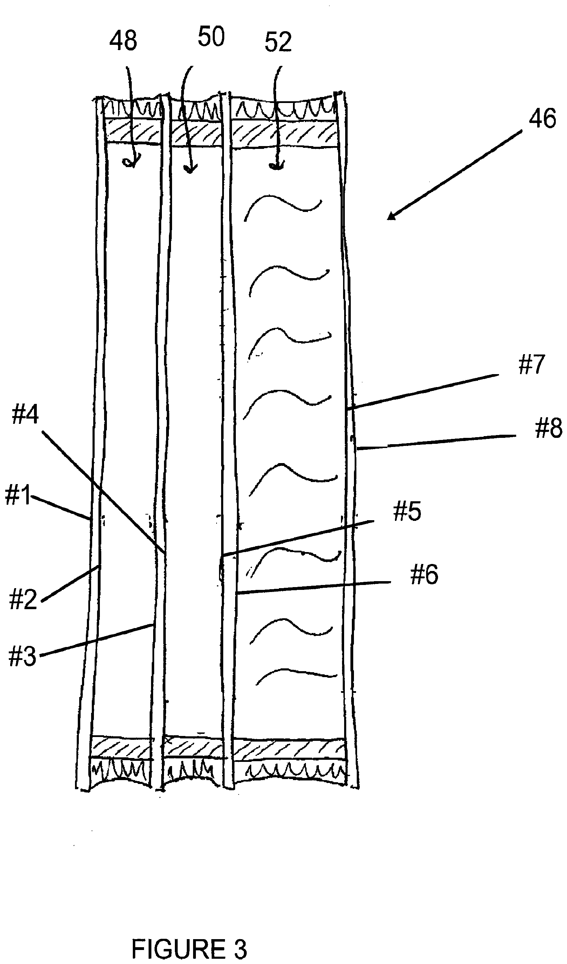

Turning to Figure 3, there is illustrated a further disclosed embodiment, which is a triple glazed insulating thermal storage unit 46. Its IGU here, designed for colder climates, has two separately sealed insulating cavities 48, 50 filled with krypton or the like, and one sealed cavity filled with the hydrogel 52.

In this illustration, the #1 surface is the exterior (environment) side surface of the first (exterior) lite in the first insulating cavity; the #2 and #3 surfaces are mutually facing surfaces in the first insulating cavity and are respectively part of the exterior lite and second lite; the #4 and #5 surfaces are mutually facing surfaces in the second insulating cavity and are respectively part of the second lite and third lite; the #6 and #7 surfaces are mutually facing surfaces in the storage cavity and are respectively part of the third lite 38 and fourth (interior) lite; and the #8 surface is the interior (living space) side surface of the interior lite.

Relatively speaking, the first insulating cavity is the exterior cavity, the second insulating cavity is the middle cavity and the storage cavity is the interior cavity. In addition, it is to be appreciated that the second lite is both the interior lite for the exterior insulating cavity and the exterior lite for the second insulating cavity. Further, the third lite is both the interior lite for the second insulating cavity and the exterior lite for the thermal storage cavity.

Furthermore, the low-e coating would be used on the #5 surface. This would minimize radiant heat loss and transferring solar energy efficiently to the thermal mass in direct thermal connection with it.

Whether or not a double or triple pane glass is required depends on the circumstances. With reference to the "Chart Of Gains And Losses," below, the inventors, working in suburban Boston, Massachusetts, have measured, over three winters, the average solar energy falling on a vertical south facing surface during the primary heating months of December, January, and February, as 30 BTUs per square foot per hour. Note this is very different from the 250 to 300 BTUs per square foot per hour figure referenced earlier for a bright sunny winter day, as 30 BTUs is the average over time with all night hours and cloudy hours included.

With further reference to the chart, the inventors measured the average temperature difference (Delta-T) between a heated space at sixty five degrees F and the outside temperature. For those same months, the average Delta-T was thirty eight degrees F.

Using these two data points, i.e., the solar energy input and the Delta-T, the inventors analyzed numerous glazing configurations to optimize the maximum net positive BTU input averages for the glazing configurations. The results of the analysis are listed in the different "Examples" in the chart.

For the different Examples summarized in the chart, representing various glazing configurations, the SHGC and U-values were calculated using "Window 5," a program published by Laurence Berkeley National Labs, a U.S. Department of Energy National Laboratory Operated by the University of California, at 1 Cyclotron Road, Berkeley, CA 94720, and at http://www.lbl.gov/. The net solar input is the stated average 30 BTUs per square foot per hour multiplied by the SHGC. The thermal losses represent the 38 degree "Delta-T" multiplied by the glazing U-value. The net is taken as average gains minus average losses, all taken in units of BTUs per square foot per hour.

The following is a summary of all data obtained:

### CHART OF GAINS AND LOSSES

Various Passive Glazing Options Based on Boston, Massachusetts Climate As Recorded by Inventors; Winter Months: December, January and February averages: Solar Input Vertical South Facing Wall = 30 BTUs/sf/hr; Delta-T Average=38 Degrees, Inside vs Outside

| Glazing Type | Example | Solar Net Input Through Glass in BTU/sf/hr | Thermal Losses through Glass in BTU/sf/hr | Net Position Gain in BTU/sf/hr |
|---|---|---|---|---|
| Generic Double Glazed Air | 1 | 30 x 0.75 = 22.5 | 38 x 0.48 = 18.24 | 4.26 |
| An embodiment of the invention, using optimized high gain, Low-e glass, krypton filled, double glazed | 2 | 30 x 0.77 = 23.1 | 38 x 0.26 = 9.88 | 13.22 |
| An embodiment of the invention, using optimized high gain, Low-e glass, krypton filled, tripled glazed, with a configuration of Optiwhite /Optiwhite /Low-e | 3 | 30 x 0.72 = 21.6 | 38 x 0.18 = 6.84 | 14.76 |
| An embodiment of the invention, using optimized high gain, Low-e glass, air filled, double glazed | 4 | 30 x 0.76 = 22.8 | 38 x 0.33 = 12.54 | 10.26 |
| Two layers of Low-e glass in triple glazing, krypton filled, with a configuration of Optiwhite /Low-e /Low-e | 5 | 30 x 0.65 = 19.5 | 38 x 0.14 = 5.32 | 14.18 |

Looking at the summary chart above, Example 1 is similar to the embodiment illustrated in Figure 1, with a traditional air filled double glazing. With this configuration, one can expect a net positive of 4.26 BTUs per square foot per hour.

Example 2 is the embodiment illustrated in Figure 2. As indicated above, this configuration used the Pilkington Optiwhite for the exterior lite in the insulating cavity, krypton for the insulating gas fill, the Pilkington Energy Advantage, low-e coated glass for the middle lite, and PPG Graylite glass for the interior lite of the storage cavity. With this configuration, one can see an increase to 13.22 BTUs per square foot per hour.

In Example 3, a triple glazing was obtained by adding one more exterior side insulating cavity. This is the configuration illustrated in Figure 3. Starting with the same configuration as in Example 2 and illustrated in Figure 2 as the base glazing, the additional insulating cavity is obtained by adding an exterior side lite of Pilkington Optiwhite, and filing the additional insulating cavity with a krypton gas fill. The addition of this cavity brought the net positive to 14.76 BTUs per square foot per hour.

On the other hand, Example 4 shows the substantial penalty to Example 2, when air instead of krypton gas is used in the only insulating cavity. Such a configuration is similar to that which might be found in earlier Trombe wall and water wall constructions. In this configuration, the net positive is reduced to 10.26 BTUs per square foot per hour.

Finally, Example 5 is another triple glazing, similar to that in Example 3. However, this configuration differs from that in Example 3 in that a Pilkington Energy Advantage low-e coated glass was used for the second lite, i.e., the lite having the #3 and #4 surfaces in Figure 3, rather than the Pilkington Optiwhite as configured in Example 3. The remainder of the configuration is the same as in Example 3. Accordingly, this configuration utilized two low-e lites instead of one.

The results of Example 5 show that, when increasing the number of exterior side insulating cavities, it is best use a single low-e lite which is thermally connected to the storage unit. Pilkington Optiwhite glass, or the like, should be used for the remaining glass needs with regard to the thermally insulating cavities.

From the chart, it can be seen that the net input of solar heat into a thermal mass is greater with the triple glazing tested in Example 3. However, with the reduced SHGC in such a configuration, one would have a smaller amount of solar radiation into the thermal mass. This reduces the stored solar heat and, therefore, the available return from solar heat. Furthermore, triple glazing in Example 3, as compared with double glazing in Example 2, introduces more spacers, which creates more thermal shorts, and introduces more seals, which creates additional avenues for failure.

Nonetheless, in much colder environments, the increase in the R-value may be the driving factor for adding the extra exterior side insulating cavities. As indicated, the tradeoffs need to be optimized for a given situation. In very extreme climates it could be desirable to add even more insulating layers to the exterior, understanding the listed tradeoffs. One can follow the thermal analysis as described above for the Boston, Massachusetts climate to arrive at optimal number of insulating layers for any climate.

The double glazed or triple glazed heat storage systems disclosed above could be coupled with a shade on the exterior side of the first glazing. During warmer months, the shade would prevent excess heat from being absorbed by the thermal mass and thereafter passing into the living area.

An example of an exterior shade suitable for such implementation, a method for manufacturing the shade, a motor for lowering and raising the shade, and a unitary assembly for housing the disclosed glazings, the external side shade and the motor, are respectively disclosed in: International Patent Application No. PCT/US2009/064682, for a "Slatted Roller Blind," filed by the present applicant on November 17, 2009 and which published as WO/2010/059581 on May 27, 2010; U.S. Provisional Patent Application No. 61/325,169, for "A Process And System For Manufacturing A Roller Blind," filed by the present applicant on April 16, 2010; U.S. Provisional Patent Application No. 61/349,610 for a "Roller Blind Powered By Rotary Motor Without Limiter Switches, Optionally With A Quick-Release Slip-Ring," filed by the present applicant on May 28, 2010; and U.S. Provisional Patent Application No. 61/352,632, for "A Unitary Assembly For An Architectural Fenestration, Providing Dynamic Solar Heat Gain Control," filed by the present applicant on June 8, 2010; wherein the disclosure of each of these identified patent applications is incorporated herein by reference.

Accordingly, the disclosed system creates supplemental heat for internal spaces using solar gain principles. In a broad overview, what is provided is an aqueous gel contained within a typical glazing cavity, provided between two sheets of glass. This cavity is capable of absorbing excess gains available in solar heat swings during the day, holding the solar heat for later use, and paying the gains back, gradually over the next twenty four hours. More specifically, the assembled system provides a combination of one or more outer sealed cavities for insulating and an inner sealed cavity for heat storage, all in a conventional sealed glazing manner, allowing the glass to be used and installed as typical insulated glazing units are today.

The benefits of the system is that it provides for large pieces of glass, containing both a translucent or transparent heat absorbing medium and a low-e insulated noble gas filled space, to be provided as one sealed glazing unit, similar to those used today in all types of glazed configurations. As the system is designed to be as much like as window as possible, it provides a broad scope of construction applications. A typical application of the disclosed embodiments would be unshaded openings which could otherwise be fitted with windows on equator facing walls so that solar gain can be efficiently used in winter.

The present invention may be embodied in other specific forms without departing from its scope. The described embodiments are to be considered in all respects only as illustrative and not as restrictive. The scope of the invention is, therefore, indicated by the appended claims and their combination in whole or in part rather than by the foregoing description. All changes that come within the meaning and range of equivalency of the claims are to be embraced within their scope.

## Claims

1. A solar energy collector and thermal storage device for placement in an exterior architectural opening of a building, comprising:
- an insulating cavity (24) including a first lite (36) on the device exterior side and a second lite (38) spaced inwardly therefrom, defining a depth of the insulating cavity, and being substantially filled with an insulating gas (28);
- a thermal storage cavity (26) including the second lite and a third lite (40) spaced inwardly therefrom, being substantially filled with a thermal storage medium (30); the thermal storage medium is a hydrogel; and
- a low-emissivity coating disposed on the insulating cavity side of the second lite inhibits thermal radiation transfer from the thermal storage medium to the exterior, **characterized in that** said second and third lite define a depth of the thermal storage cavity which is at least the same size as the insulating cavity depth; and **in that** said hydrogel adheres to the second lite and the third lite and has cohesion characteristics such that it is self supporting and maintains its shape within the thermal storage cavity.

2. The solar energy collector of claim 1,
wherein the second lite is spaced from the first lite by a first edge spacer (32) and the third lite is spaced from the second lite by a second edge spacer (34), optionally comprising a seal (42, 44) around the first edge spacer and the second edge spacer, or
wherein optionally the first edge spacer contains a desiccant.

3. The solar energy collector and thermal storage device of claim 1,
wherein the hydrogel is relatively immune to the effects of UV light, or
wherein the thermal storage medium is thermally coupled to the second lite and the third lite, or
wherein the thermal storage medium is tinted and coverts solar radiation in the visible region of the solar spectrum into thermal energy, or
wherein the thermal storage medium contains a phase change material, or
wherein the thermal storage medium consists primarily of water and sodium polyacrylate, or
wherein the second lite and/or the third lite are tinted, or
wherein the second lite and third lite individually do not exceed one-quarter inch (2,54 cm) in thickness, or
wherein the device is translucent, or
wherein the device is transparent.

4. The solar energy collector and thermal storage device of claim 1,
where the insulating gas is a noble gas,
where the noble gas is preferably argon, krypton or xenon.

5. The solar energy collector and thermal storage device of claim 4,
wherein the noble gas is argon and the depth of the insulating cavity is about one half of an inch, or
wherein the noble gas is krypton and the depth of the insulating cavity is about three-eighths of an inch, or
wherein the noble gas is xenon and the depth of the insulating cavity is about one quarter of an inch.

6. The solar energy collector and thermal storage device of claim 2, comprising a seal around the first edge spacer and the second edge spacer, and wherein the seal around the first edge spacer and the second edge spacer comprises a first seal around the first edge spacer and a second seal around the second edge spacer,
wherein optionally the first edge seal or the second edge seal is made of one or more of silicone, polyisobutylene, hot melt butyl, polyurethane, polysulfide, and acrylic latex, or
optionally further comprising a fourth lite positioned on the exterior side of the storage device, spaced from said first lite by a third edge spacer and a third seal around the third edge spacer.

7. The solar energy collector and thermal storage device of claim 1,
wherein the thermal storage medium is light transmitting,
wherein optionally the thermal storage medium is transparent.

8. The solar energy collector and thermal storage device of claim 1,
wherein the thermal storage medium converts solar radiation in the infrared region of the solar spectrum into thermal energy,
wherein optionally the thermal storage medium is tinted and converts solar radiation in the infrared region of the solar spectrum and solar radiation in the visible region of the solar spectrum into thermal energy.

9. The solar energy collector and thermal storage device of claim 1,
wherein one or more of the first lite, the second lite and the third lite are made of transparent glass,
wherein optionally the first light is transparent glass having a solar heat gain coefficient greater than 0.70.

10. The solar energy collector and thermal storage device of claim 1,
wherein the low-emissivity coating has an emissivity of about 0.3 or below.

11. The solar energy collector and thermal storage device of claim 10,
wherein the low-emissivity coating converts from about 0.5% to 99.5% of the solar radiation in the infrared region of the solar spectrum into thermal energy,
wherein optionally the thermal energy is transferred into the thermal storage medium.

12. The solar energy collector and thermal storage device of claim 1,
wherein the depth of the thermal storage cavity is greater than that of the insulating cavity,
wherein optionally the depth of the thermal storage cavity is at least twice that of the insulating cavity.

13. The solar energy collector and thermal storage device of claim 1,
wherein the depth of the thermal storage cavity is a range from about one inch (2,54cm) to about four inches (10,16cm), wherein the depth of the thermal storage cavity is most preferably a range from about one inch (2,54cm) to about three inches (7,62cm), wherein optionally the depth of the thermal storage cavity is about one inch (2,54cm), about two inches (5,08cm), or about three inches (7,62cm).

14. An assembly comprising the solar energy collector and thermal storage device of claim 1 and a shade disposed on the exterior side of the first lite.

15. The assembly of claim 14,
comprising a motor for lowering and raising the shade,
wherein optionally the assembly is a unitary assembly for housing the solar energy collector and thermal storage device, the shade of claim and the shade motor.

## Patentansprüche

1. Eine Solarenergiekollektor- und Wärmespeichervorrichtung zum Anbringen in einer architektonischen Außenöffnung eines Gebäudes, welche:
- einen Isolationszwischenraum (24), der eine erste Glasscheibe (36) auf der Außenseite der Vorrichtung und eine davon nach innen beabstandete zweite Glasscheibe (38), die die Tiefe des Isolationszwischenraums bildet, umfasst und im Wesentlichen mit einem Isoliergas (28) gefüllt ist,
- einen Wärmespeicherzwischenraum (26), der die zweite Glasscheibe und eine davon nach innen beabstandete dritte Glasscheibe (40) umfasst und im Wesentlichen mit einem Wärmespeichermedium (30) gefüllt ist, wobei das Wärmespeichermedium ein Hydrogel ist, und
- eine Beschichtung mit einem niedrigen Emissionskoeffizienten, die auf der zum Isolationszwischenraum zeigenden Seite der zweiten Glasscheibe aufgebracht ist und den Weg der Wärmestrahlung vom Wärmespeichermedium nach außen hemmt,
umfasst, **dadurch gekennzeichnet, dass** diese zweite und diese dritte Glasscheibe die Tiefe des Wärmespeicherzwischenraums bilden, welche mindestens dieselbe Größe wie diejenige des Isolationszwischenraums besitzt, **und dass** dieses Hydrogel an der zweiten Glasscheibe und der dritten Glasscheibe anhaftet und derartige Kohäsionseigenschaften besitzt, dass es sich selbst trägt und seine Gestalt in dem Wärmespeicherzwischenraum behält.

2. Der Solarenergiekollektor nach Anspruch 1, wobei:
- die zweite Glasscheibe von der ersten Glasscheibe durch einen ersten Randabstandshalter (32) beabstandet ist und
- die dritte Glasscheibe von der zweiten Glasscheibe durch einen zweiten Randabstandshalter (34) beabstandet ist, die wahlweise eine Versiegelung (42, 44) um den ersten Randabstandshalter und den zweiten Randabstandshalter umfassen, oder wobei
wahlweise der erste Randabstandshalter ein Trocknungsmittel enthält.

3. Die Solarenergiekollektor- und Wärmespeichervorrichtung nach Anspruch 1, wobei das Hydrogel gegenüber der Einwirkung von UV-Licht relativ unempfänglich ist oder wobei das Wärmespeichermedium mit der zweiten Glasscheibe und der dritten Glasscheibe wärmegekoppelt ist oder wobei
das Wärmespeichermedium getönt ist und die Sonneneinstrahlung im sichtbaren Bereich des Sonnenspektrums in Wärmeenergie umwandelt oder wobei das Wärmespeichermedium ein Phasenumwandlungsmaterial enthält oder wobei
das Wärmespeichermedium hauptsächlich aus Wasser und Natriumpolyacrylat besteht oder wobei die zweite Glasscheibe und/oder die dritte Glasscheibe getönt ist/sind oder wobei die Dicke der zweiten Glasscheibe und der dritten Glasscheibe jeweils ein Viertel eines Zolls (2,54 cm) nicht übersteigt oder wobei
die Vorrichtung durchscheinend oder
die Vorrichtung durchsichtig ist.

4. Die Solarenergiekollektor- und Wärmespeichervorrichtung nach Anspruch 1, wobei
das Isolationsgas ein Edelgas ist und wobei
das Edelgas vorzugsweise Argon, Krypton oder Xenon ist.

5. Die Solarenergiekollektor- und Wärmespeichervorrichtung nach Anspruch 4, wobei
das Edelgas Argon ist und die Tiefe des Isolationszwischenraums etwa einen halben Zoll beträgt oder wobei
das Edelgas Krypton ist und die Tiefe des Isolationszwischenraums etwa drei Achtel Zoll beträgt oder wobei
das Edelgas Xenon ist und die Tiefe des Isolationszwischenraums etwa einen Viertelzoll beträgt.

6. Die Solarenergiekollektor- und Wärmespeichervorrichtung nach Anspruch 2, die eine Versiegelung um den ersten Randabstandshalter und den zweiten Randabstandshalter umfasst, wobei
die Versiegelung um den ersten Randabstandshalter und den zweiten Randabstandshalter eine erste Versiegelung um den ersten Randabstandshalter und eine zweite Versiegelung um den zweiten Randabstandshalter umfasst und wobei wahlweise die erste Randversiegelung oder die zweite Randversiegelung aus einem oder mehreren von Silicon, Polyisobutylen, Schmelzbutyl, Polyurethan, Polysulfid und Acryllatex hergestellt ist oder
wahlweise weiterhin eine vierte Glasscheibe umfasst, die auf der Außenseite der Speichervorrichtung angeordnet und von der ersten Glasscheibe durch einen dritten Randabstandshalter und eine dritte Versiegelung um den dritten Randabstandshalter beabstandet ist.

7. Die Solarenergiekollektor- und Wärmespeichervorrichtung nach Anspruch 1, wobei das Wärmespeichermedium lichtdurchlässig ist, wobei wahlweise das Wärmespeichermedium transparent ist.

8. Die Solarenergiekollektor- und Wärmespeichervorrichtung nach Anspruch 1, wobei durch das Wärmespeichermedium die Sonneneinstrahlung im Infrarotbereich des Sonnenspektrums in Wärmeenergie umgewandelt wird, wobei
wahlweise das Wärmespeichermedium getönt ist und die Sonneneinstrahlung im Infrarotbereich des Sonnenspektrums und die Sonneneinstrahlung im sichtbaren Bereich des Sonnenspektrums in Wärmeenergie umwandelt.

9. Die Solarenergiekollektor- und Wärmespeichervorrichtung nach Anspruch 1, wobei eine oder mehrere von erster Glasscheibe, zweiter Glasscheibe und dritter Glasscheibe aus transparentem Glas hergestellt ist/sind, wobei
wahlweise die erste Glasscheibe aus transparentem Glas mit einem Gesamtenergiedurchlassgrad von größer als 0,70 besteht.

10. Die Solarenergiekollektor- und Wärmespeichervorrichtung nach Anspruch 1, wobei die niedrig emittierende Beschichtung einen Emissionskoeffizienten von etwa 0,3 oder darunter besitzt.

11. Die Solarenergiekollektor- und Wärmespeichervorrichtung nach Anspruch 10, wobei von der niedrig emittierenden Beschichtung etwa 0,5 % bis 99,5 % der Sonneneinstrahlung im Infrarotbereich des Sonnenspektrums in Wärmeenergie umgewandelt werden, wobei
wahlweise die Wärmeenergie auf das Wärmespeichermedium übertragen wird.

12. Die Solarenergiekollektor- und Wärmespeichervorrichtung nach Anspruch 1, wobei die Tiefe des Wärmespeicherzwischenraums größer als diejenige des Isolationszwischenraums ist, wobei
wahlweise die Tiefe des Wärmespeicherzwischenraums mindestens das Zweifache derjenigen des Isolationszwischenraums beträgt.

13. Die Solarenergiekollektor- und Wärmespeichervorrichtung nach Anspruch 1, wobei die Tiefe des Wärmespeicherzwischenraums innerhalb eines Bereichs von etwa einem Zoll (2,54 cm) bis etwa vier Zoll (10,16 cm) liegt, wobei die Tiefe des Wärmespeicherzwischenraums am meisten bevorzugt innerhalb eines Bereichs von etwa einem Zoll (2,54 cm) bis etwa drei Zoll (7,62 cm) liegt, wobei
wahlweise die Tiefe des Wärmespeicherzwischenraums etwa ein Zoll (2,54 cm), etwa zwei Zoll (5,08 cm) oder etwa drei Zoll (7,62 cm) beträgt.

14. Ein Aufbau, der die Solarenergiekollektor- und Wärmespeichervorrichtung nach Anspruch 1 und einen auf der Außenseite der ersten Glasscheibe angebrachten Sonnenschutz umfasst.

15. Der Aufbau nach Anspruch 14, welcher einen Motor für das Hoch- und Herunterbewegen des Sonnenschutzes umfasst, wobei
wahlweise der Aufbau ein einheitlicher Aufbau für die Aufnahme der Solarenergiekollektor- und Wärmespeichervorrichtung, des beanspruchten Sonnenschutzes und dessen Motors ist.

## Revendications

1. Collecteur d'énergie solaire et dispositif de stockage thermique destinés à être placés dans une ouverture architecturale externe d'un bâtiment, comprenant :
- une cavité isolante (24) comprenant un premier volume (36) sur le côté extérieur du dispositif et un second volume (38) espacés de celui-ci vers l'intérieur, définissant une profondeur de la cavité isolante, et étant sensiblement rempli avec un gaz isolant (28) ;
- une cavité de stockage thermique (26) comprenant le second volume et un troisième volume (40) espacé de celui-ci vers l'intérieur, et sensiblement rempli avec un milieu de stockage thermique (30) ;
le milieu de stockage thermique étant un hydrogel ;
et
- un revêtement à faible émissivité disposé sur le côté cavité isolante du second volume et qui empêche tout transfert de rayonnement thermique entre le milieu de stockage thermique et l'extérieur,
**caractérisé en ce que** lesdits second et troisième volumes définissent une profondeur de la cavité de stockage thermique qui est au moins de la même taille que la profondeur de la cavité isolante ; et **en ce que** ledit hydrogel adhère au second volume et au troisième volume et présente des caractéristiques de cohésion de sorte qu'il est autoportant et qu'il maintient sa forme dans la cavité de stockage thermique.

2. Collecteur d'énergie solaire selon la revendication 1,
dans lequel le second volume est espacé du premier volume par un premier espaceur de bords (32) et le troisième volume est espacé du second volume par un second espaceur de bords (34), comprenant éventuellement un joint (42, 44) autour du premier espaceur de bords et du second espaceur de bords, ou
dans lequel, éventuellement, le premier espaceur de bords contient un agent dessiccateur.

3. Collecteur d'énergie solaire et dispositif de stockage thermique selon la revendication 1, dans lesquels l'hydrogel est relativement insensible aux effets de la lumière UV, ou
dans lesquels le milieu de stockage thermique est couplé thermiquement au second volume et au troisième volume, ou
dans lesquels le milieu de stockage thermique est teinté et convertit le rayonnement solaire dans la zone visible du spectre solaire en énergie thermique, ou
dans lesquels le milieu de stockage thermique contient un matériau à changement de phase, ou
dans lesquels le milieu de stockage thermique se compose principalement d'eau et de polyacrylate de sodium, ou
dans lesquels le second volume et/ou le troisième volume sont teintés, ou
dans lesquels l'épaisseur individuelle du second volume et du troisième volume ne dépasse pas un quart de pouce (2,54 cm), ou
dans lesquels le dispositif est translucide, ou
dans lesquels le dispositif est transparent.

4. Collecteur d'énergie solaire et dispositif de stockage thermique selon la revendication 1, dans lesquels le gaz isolant est un gaz noble,
dans lesquels le gaz noble est de préférence de l'argon, du krypton ou du xénon.

5. Collecteur d'énergie solaire et dispositif de stockage thermique selon la revendication 4, dans lesquels le gaz noble est de l'argon et la profondeur de la cavité isolante est d'environ un demi-pouce, ou
dans lesquels le gaz noble est du krypton et la profondeur de la cavité isolante est d'environ trois huitièmes de pouce, ou
dans lesquels le gaz noble est du xénon et la profondeur de la cavité isolante est d'environ un quart de pouce.

6. Collecteur d'énergie solaire et dispositif de stockage thermique selon la revendication 2, comprenant un joint autour du premier espaceur de bords et du second espaceur de bords, et
dans lesquels le joint autour du premier espaceur de bords et du second espaceur de bords comprend un premier joint autour du premier espaceur de bords et un second joint autour du second espaceur de bords,
dans lesquels, éventuellement, le premier joint de bord ou le second joint de bord est composé d'un ou plusieurs de silicone, de polyisobutylène, de butyle fondu à chaud, de polyuréthane, de polysulfure, et de latex acrylique, ou
comprenant en outre éventuellement un quatrième volume positionné sur le côté extérieur du dispositif de stockage, espacé dudit premier volume par un troisième espaceur de bords, et un troisième joint autour du troisième espaceur de bords.

7. Collecteur d'énergie solaire et dispositif de stockage thermique selon la revendication 1,
dans lesquels le milieu de stockage thermique transmet la lumière,
dans lesquels, éventuellement, le milieu de stockage thermique est transparent.

8. Collecteur d'énergie solaire et dispositif de stockage thermique selon la revendication 1,
dans lesquels le milieu de stockage thermique convertit le rayonnement solaire dans la zone infrarouge du spectre solaire en énergie thermique,
dans lesquels, éventuellement, le milieu de stockage thermique est teinté et convertit le rayonnement solaire dans la zone infrarouge du spectre solaire et le rayonnement solaire dans la zone visible du spectre solaire en énergie thermique.

9. Collecteur d'énergie solaire et dispositif de stockage thermique selon la revendication 1,
dans lesquels un ou plusieurs du premier volume, du second volume et du troisième volume sont composés de verre transparent,
dans lesquels, éventuellement, la première lumière est un verre transparent ayant un coefficient de gain de chaleur solaire supérieur à 0,70.

10. Collecteur d'énergie solaire et dispositif de stockage thermique selon la revendication 1,
dans lesquels le revêtement à faible émissivité présente une émissivité d'environ 0,3 ou moins.

11. Collecteur d'énergie solaire et dispositif de stockage thermique selon la revendication 10,
dans lesquels le revêtement à faible émissivité convertit environ 0,5% à 99,5% du rayonnement solaire dans la zone infrarouge du spectre solaire en énergie thermique,
dans lesquels, éventuellement, l'énergie thermique est transférée vers le milieu de stockage thermique.

12. Collecteur d'énergie solaire et dispositif de stockage thermique selon la revendication 1,
dans lesquels la profondeur de la cavité de stockage thermique est supérieure à celle de la cavité isolante,
dans lesquels, éventuellement, la profondeur de la cavité de stockage thermique est au moins deux fois supérieure à celle de la cavité isolante.

13. Collecteur d'énergie solaire et dispositif de stockage thermique selon la revendication 1,
dans lesquels la profondeur de la cavité de stockage thermique est comprise entre environ un pouce (2,54 cm) et environ quatre pouces (10,16 cm),
dans lesquels la profondeur d la cavité de stockage thermique est de préférence comprise entre environ un pouce (2,54 cm) et environ trois pouces (7,62 cm),
dans lesquels, éventuellement, la profondeur de la cavité de stockage thermique est comprise entre environ un pouce (2,54 cm) et environ deux pouces (5,08 cm), ou environ trois pouces (7,62 cm).

14. Ensemble comprenant le collecteur d'énergie solaire et dispositif de stockage thermique selon la revendication 1 et un store disposé sur le côté extérieur du premier volume.

15. Ensemble selon la revendication 14, comprenant un moteur destiné à faire descendre et remonter le store, dans lequel, éventuellement, l'ensemble est un ensemble unitaire destiné à contenir le collecteur d'énergie solaire et dispositif de stockage thermique, le store selon la revendication, et le moteur de store.
